# EUROPEAN PATENT APPLICATION

(11) **EP 2 905 944 A1**
(43) Date of publication of application: **12.08.2015**
(21) Application number: 14801045.7
(22) Date of filing: 22.04.2014
(51) Int. Cl.: H04L 29/08

(54) **WEBPAGE REAL-TIME COMMUNICATION METHOD AND SYSTEM, AND TERMINAL**

(30) Priority: 21.05.2013 CN 201310189867
(71) Applicant: Huawei Device Co., Ltd., Longgang District Shenzhen Guangdong 518129 (CN)
(72) Inventor: WANG, Yahui, Shenzhen Guangdong 518129 (CN); GAO, Wenmei, Shenzhen Guangdong 518129 (CN); FAN, Shunan, Shenzhen Guangdong 518129 (CN); LV, Xiaoqiang, Shenzhen Guangdong 518129 (CN); JING, Hao, Shenzhen Guangdong 518129 (CN)
(74) Representative: Lord, Michael
(86) International application number: PCT/CN2014/075902
(87) International publication number: WO 2014/187214

(57) **Abstract**

Embodiments of the present invention disclose a method and a system for web real-time communication and a terminal. The method includes: performing, by a first terminal, web real-time communication with a second terminal, where the first terminal and the second terminal separately save property information of a current media channel; when a network connection is restored within a preset time threshold after network disconnection occurs to the first terminal, automatically initiating, according to the property information, a process of restoring or establishing a media channel; and continuing, by the first terminal, web real-time communication with the second terminal through the restored or established media channel. In the embodiments of the present invention, when a network connection is restored after short network disconnection, a disconnected terminal can automatically initiate a process of restoring or establishing a media channel so that web real-time communication is reconnected automatically, which avoids impacting use experience of a user.

## Description

This application claims priority to Chinese Patent No. 201310189867.1, filed with the Chinese Patent Office on May 21, 2013 and entitled "METHOD AND SYSTEM FOR WEB REAL-TIME COMMUNICATION AND TERMINAL", which is incorporated herein by reference in its entirety.

### TECHNICAL FIELD

The present invention relates to the field of communications technologies, and in particular, to a method and a system for web real-time communication and a terminal.

### BACKGROUND

WebRTC (Web Real-time Communication, web real-time communication) is a software architecture that aims to support a real-time voice dialog or video dialog performed by using a network browser. WebRTC can implement functions such as audio and video communication and multi-party conferencing that are performed between browsers or between a browser and a traditional terminal. After two communication parties who use WebRTC negotiate through a signaling path to establish a call, a media stream can be directly transmitted between browsers.

Based on the advantage of portability, terminals (for example, smartphones or tablet computers) have already become an important application platform of WebRTC.

However, due to reasons such as an unstable network signal or even absence of signal caused by moving of a terminal or wireless network deployment, for example, a terminal user enters a signal coverage hole or a signal receives interference, WebRTC between terminals may be interrupted.

When the WebRTC between terminals is interrupted, a user needs to perform reconnection in a manual redial manner to restore the WebRTC, which affects

### SUMMARY

Embodiments of the present invention provide a method and a system for web real-time communication and a terminal. When a network connection is restored after short network disconnection, a disconnected terminal can automatically initiate a process of restoring or establishing a media channel so that the web real-time communication is reconnected automatically, which avoids impacting use experience of a user.

To resolve the foregoing technical problem, the embodiments of the present invention disclose the following technical solution:

According to one aspect, a method for web real-time communication is provided, including:
performing, by a first terminal, web real-time communication with a second terminal, where the first terminal and the second terminal separately save property information of a current media channel;
when a network connection is restored within a preset time threshold after network disconnection occurs to the first terminal, automatically initiating, according to the property information, a process of restoring or establishing a media channel; and
continuing, by the first terminal, web real-time communication with the second terminal through the restored or established media channel.

With reference to the foregoing one aspect, in a first possible implementation manner, the process of restoring or establishing a media channel includes:
when a private IP address and a port that are of a first Network Address Translation NAT client on the first terminal do not change, sending, by the first NAT client, a first request message to a first NAT server to which the first NAT client belongs, where the first request message is used to request the first NAT server to reestablish an original media channel; and
receiving, by the first NAT server, the first request message and reestablishing, according to property information of the original media channel, the original media channel.

With reference to the foregoing one aspect, and/or the first possible implementation manner, in a second possible implementation manner, the process of restoring or establishing a media channel further includes:
when a NAT manner is a Simple Traversal of User Datagram Protocol through NAT STUN manner and a change occurs to a private IP address and a port that are of a STUN client on the first terminal, sending, by the STUN client, a second request message to a STUN server to which the STUN client belongs, where the second request message carries information about an original public IP address and an original port that are of the STUN client; and
establishing, by the STUN server, a mapping relationship between information about a new IP address and a new port that are of the STUN client and the information about the original public IP address and the original port that are of the STUN client, and establishing a new media channel according to the mapping relationship.

With reference to the foregoing one aspect, and/or the first possible implementation manner, and/or the second possible implementation manner, in a third possible implementation manner, the process of restoring or establishing a media channel further includes:
when a NAT manner is a traversal using relay NAT TURN manner and a change occurs to a private IP address and a port that are of a TURN client on the first terminal, sending, by the TURN client, a third request message to a TURN server to which the TURN client belongs, where the third request message carries information about an original public IP address and an original port that are of the TURN server; and
establishing, by the TURN server, a mapping relationship between information about a new IP address and a new port that are of the TURN client and the information about the original public IP address and the original port that are of the TURN server, and establishing a new media channel according to the mapping relationship.

With reference to the foregoing one aspect, and/or the first possible implementation manner, and/or the second possible implementation manner, and/or the third possible implementation manner, in a fourth possible implementation manner, the process of restoring or establishing a media channel includes:
when the first terminal and a Universal Plug and Play UPnP gateway device to which the first terminal belongs both support the UPnP protocol, sending, by a NAT client on the terminal, a UPnP port mapping request to the UPnP gateway device, receiving information about a port that is allocated, according to the port mapping request, by the UPnP gateway device, and reestablishing an original media channel according to an original IP address and the allocated port.

According to another aspect, a terminal is provided, including:
a web real-time communication module, configured to perform web real-time communication with a second terminal;
an information saving module, configured to save property information of a current media channel;
a network disconnection detecting module, configured to detect whether network disconnection occurs, and when a network connection is restored within a preset time threshold after network disconnection occurs, trigger a channel restoration initiating module; and
the channel restoration initiating module, configured to automatically initiate, according to the property information, a process of restoring or establishing a media channel; where
the web real-time communication module is further configured to continue web real-time communication with the second terminal through the restored or established media channel.

With reference to the foregoing another aspect, in a first possible implementation manner, the channel restoration initiating module includes:
a first request message sending submodule, configured, when a private IP address and a port that are of a NAT client on the terminal do not change, for the NAT client to send a first request message to a first NAT server to which the NAT client belongs, where the first request message is used to request the first NAT server to reestablish an original media channel according to property information of the original media channel.

With reference to the foregoing another aspect, and/or the first possible implementation manner, in a second possible implementation manner, the channel restoration initiating module further includes:
a second request message sending submodule, configured, when a NAT manner is a Simple Traversal of User Datagram Protocol through NAT STUN manner and a change occurs to a private IP address and a port that are of a STUN client on the terminal, for the STUN client to send a second request message to a STUN server to which the STUN client belongs, where the second request message carries information about an original public IP address and an original port that are of the STUN client, so that the STUN server establishes a mapping relationship between information about a new IP address and a new port that are of the STUN client and the information about the original public IP address and the original port that are of the STUN client, and establishes a new media channel according to the mapping relationship.

With reference to the foregoing another aspect, and/or the first possible implementation manner, and/or the second possible implementation manner, in a third possible implementation manner, the channel restoration initiating module further includes:
a third request message sending submodule, configured, when a NAT manner is a traversal using relay NAT TURN manner and a change occurs to a private IP address and a port that are of a TURN client on the terminal, for the TURN client to send a third request message to a TURN server to which the TURN client belongs, where the third request message carries information about an original public IP address and an original port that are of the TURN server, so that the TURN server establishes a mapping relationship between information about a new IP address and a new port that are of the TURN client and the information about the original public IP address and the original port that are of the TURN server, and establishes a new media channel according to the mapping relationship.

With reference to the foregoing another aspect, and/or the first possible implementation manner, and/or the second possible implementation manner, and/or the third possible implementation manner, in a fourth possible implementation manner, the channel restoration initiating module includes:
a port allocation requesting submodule, configured, when the terminal and a UPnP gateway device to which the terminal belongs both support the UPnP protocol, for a NAT client on the terminal to send a UPnP port mapping request to the UPnP gateway device;
a port information receiving submodule, configured to receive information about a port that is allocated, according to the port mapping request, by the UPnP gateway device; and
a channel restoring submodule, configured for the NAT client to reestablish an original media channel according to an original IP address and the allocated port.

According to still another aspect, a system for web real-time communication is provided, including: a first terminal and a second terminal that perform web real-time communication, where the first terminal and the second terminal separately save property information of a current media channel, and when a network connection is restored within a preset time threshold after network disconnection occurs to the first terminal,
the first terminal is configured to automatically initiate, according to the property information, a process of restoring or establishing a media channel, and continue web real-time communication with the second terminal through the restored or established media channel.

With reference to the foregoing still another aspect, in a first possible implementation manner, the first terminal specifically includes a first NAT client, and the first NAT client corresponds to a first NAT server;
the first NAT client is configured to send, when a private IP address and a port do not change, a first request message to the first NAT server, where the first request message is used to request the first NAT server to reestablish an original media channel; and
the first NAT server is configured to receive the first request message and reestablish the original media channel according to property information of the original media channel.

With reference to the foregoing still another aspect, and/or the first possible implementation manner, in a second possible implementation manner, when the first NAT client is a STUN client, and the first NAT server is a STUN server,
the STUN client is configured to send, when a change occurs to a private IP address and a port, a second request message to the STUN server, where the second request message carries information about an original public IP address and an original port that are of the STUN client;
the STUN server is configured to establish a mapping relationship between information about a new IP address and a new port that are of the STUN client and the information about the original public IP address and the original port that are of the STUN client, and establish a new media channel according to the mapping relationship.

With reference to the foregoing still another aspect, and/or the first possible implementation manner, and/or the second possible implementation manner, in a third possible implementation manner, when the first NAT client is a TURN client, and the first NAT server is a TURN server,
the TURN client is configured to send, when a change occurs to a private IP address and a port, a third request message to the TURN server, where the third request message carries information about an original public IP address and an original port that are of the TURN server; and
the TURN server is configured to establish a mapping relationship between information about a new IP address and a new port that are of the TURN client and the information about the original public IP address and the original port that are of the TURN server, and establish a new media channel according to the mapping relationship.

With reference to the foregoing still another aspect, and/or the first possible implementation manner, and/or the second possible implementation manner, and/or the third possible implementation manner, in a fourth possible implementation manner, when the first terminal and a UPnP gateway device to which the first terminal belongs both support the UPnP protocol,
a NAT client on the terminal is configured to send a UPnP port mapping request to the UPnP gateway device, receive information about a port that is allocated, according to the port mapping request, by the UPnP gateway device, and reestablish an original media channel according to an original IP address and the allocated port.

In the embodiments of the present invention, during a process of web real-time communication between a first terminal and a second terminal, when a network connection is restored after short network disconnection, the disconnected first terminal can automatically initiate a process of restoring or establishing a media channel, so as to restore or establish a media channel and continue web real-time communication with the second terminal through the restored media channel. In this way, the web real-time communication between the terminals of both parties can be reconnected automatically, which avoids impacting use experience of a user brought by communication interruption.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, a person of ordinary skill in the art may still derive other drawings from these accompanying drawings without creative efforts.
FIG. 1 is a flowchart of an embodiment of a method for web real-time communication according to the present invention;
FIG. 2 is a flowchart of an embodiment of a method for web real-time communication in a first application scenario according to the present invention;
FIG. 3 is a flowchart of an embodiment of a method for web real-time communication in a second application scenario according to the present invention;
FIG. 4 is a flowchart of an embodiment of a method for web real-time communication in a third application scenario according to the present invention;
FIG. 5 is a flowchart of an embodiment of a method for web real-time communication in a fourth application scenario according to the present invention;
FIG. 6 is a block diagram of a first embodiment of a terminal according to the present invention;
FIG. 7 is an implementation block diagram of a channel restoration initiating module according to the present invention; and
FIG. 8 is an implementation block diagram of another channel restoration initiating module according to the present invention.

### DESCRIPTION OF EMBODIMENTS

To make a person skilled in the art understand the technical solutions in the embodiments of the present invention better, and make the objectives, features, and advantages of the embodiments of the present invention clearer, the following further describes the technical solution in the embodiments of the present invention in detail with reference to the accompanying drawings.

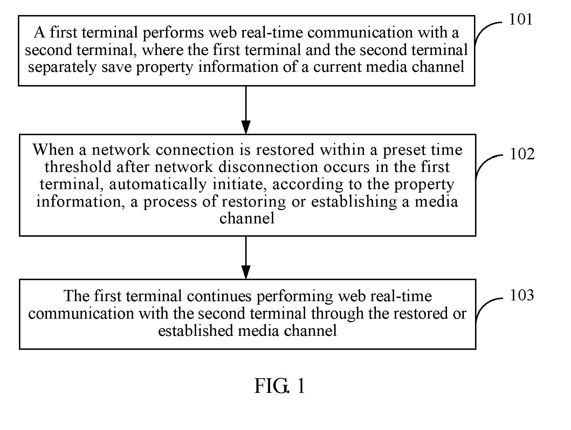

Refer to FIG. 1, which is a flowchart of an embodiment of a method for web real-time communication according to the present invention. Specifically, the method may include the following steps:

Step 101. A first terminal performs NAT (Network Address Translator, web real-time communication) with a second terminal, where the first terminal and the second terminal separately save property information of a current media channel.

In this step, the property information of the media channel refers to, in a case that the media channel is properly connected, configuration information that relates to the current media channel and is recorded by the terminal.

Step 102. When a network connection is restored within a preset time threshold after network disconnection occurs to the first terminal, automatically initiate, according to the property information, a process of restoring or establishing a media channel;

In this embodiment, the process of restoring or establishing a media channel is automatically initiated by a network-disconnected terminal, so as to implement automatic NAT reconnection.

Generally, different network interface application programs are provided inside a terminal to detect a network connection state. In this embodiment, a time threshold is preset on the terminal side to record time taken to restore a network connection after network disconnection. It can be learned that what is implemented in this embodiment is that the terminal can automatically initiate NAT reconnection when short network disconnection suddenly occurs, so that a terminal user does not perceive communication interruption at all.

A specific configuration value of the time threshold may be set according to an actual application scenario, which is not specifically limited herein.

Step 103. The first terminal continues web real-time communication with the second terminal through the restored or established media channel.

In this embodiment of the present invention, during a process of web real-time communication between a first terminal and a second terminal, when a network connection is restored within a preset time threshold after network disconnection occurs to the first terminal, the disconnected first terminal can automatically initiate a process of restoring or establishing a media channel to restore or establish a media channel and continue web real-time communication with the second terminal through the restored media channel. In this way, the web real-time communication between the two terminals of both parties is reconnected automatically, which avoids impacting use experience of a user brought by communication interruption.

A NAT translation problem generally exists in a current terminal communications network. For example, an IP address that is generally obtained by a mobile phone terminal is an intranet address of an operator. Therefore, the mobile phone terminal only has a private IP address of a local area network in which the mobile phone terminal is located no matter whether the mobile phone terminal accesses the Internet through Wi-Fi or a 3G connection. However, a public IP needs to be obtained by using NAT translation in order to communicate with a terminal that is in an external network, and a problem of NAT server traversal for communication exists.

Therefore, in an embodiment of the present invention, the process of restoring or establishing a media channel described in the foregoing step 102 may specifically include the following implementation manner:

When a private IP address and a port that are of a first NAT client on the first terminal do not change, the first NAT client sends a first request message to a first NAT server to which the first NAT client belongs, where the first request message is used to request the first NAT server to reestablish an original media channel; and the first NAT server receives the first request message and reestablishes, according to property information of the original media channel, the original media channel.

In the foregoing embodiment, the private IP address and the port that are of the first NAT client on the first terminal do not change, and property information of a related media channel does not change. In addition, because the property information of the current media channel is saved in the first NAT server, the property information of the current media channel can be directly used to send the first request message to the first NAT server, so that the first NAT server reestablishes the original media channel according to the property information of the original media channel.

When the first terminal performs NAT communication with the second terminal, the second terminal should also save the related property information of the media channel. This is because the second terminal may learn, according to the property information, that the communications terminal that initiates the process of restoring or establishing a media channel is the first terminal with which the second terminal previously communicates, and therefore the process does not need to be re-authenticated by the second terminal, and a connection may be established directly, which further shortens time of NAT reconnection.

STUN (Session Traversal Utilities for NAT, Session Traversal Utilities for NAT) and TURN (Traversal Using Relay NAT, traversal using relay NAT) are two most commonly used NAT traversal manners of WebRTC communication. Therefore, in the foregoing embodiment, a NAT server may include: a STUN server and a TURN server. The following separately describes the two NAT traversal manners briefly.

The STUN NAT traversal manner is introduced first. VoIP (Voice over Internet Protocol, IP telephony) is used as an example. A VOIP terminal of a private network obtains an external address of an outlet NAT server in advance, and then fills in address information in payload with the external address of the outlet NAT server instead of a private IP address of a terminal within the private network. In this way, content in the payload does not need to be modified when it is forwarded by the NAT server and it is only necessary to translate an IP address in a packet header according to a common NAT process, where IP address information in the payload is consistent with address information in the packet header.

An application program on the VOIP terminal, that is, a STUN client (STUN CLIENT) sends a request STUN message to a STUN server (STUN SERVER) by using the UDP. The STUN SERVER receives the request message and generates a response message, where the response message carries a source port of the request message, that is, an external port that corresponds to the STUN client and is on the NAT server. Then, the response message is sent to the STUN client by means of NAT. The STUN client learns an external address of the NAT server thereof by using content in a message body of the response message and fills in a UDP load of a subsequent call protocol with the external address of the NAT server to notify a peer terminal that an RTP (Real-time Transport Protocol, Real-time Transport Protocol) receiving address and an RTP receiving port number of a local terminal are an external address and an external port number of the NAT. Because a NAT mapping entry of a media stream is established on the NAT in advance by using the STUN protocol, a media stream may smoothly traverse the NAT.

Similar to STUN, in a TURN manner, a VOIP terminal in a private network also obtains a service address of a TURN server (TURN Server) on a public network in advance by using a mechanism, and then directly fills in address information in packet payload with the public address of the TURN server. In TURN, a public address and a port of the TURN server are allocated as an external receiving address and an external receiving port of the VOIP terminal in the private network, which means that all packets sent by a terminal in the private network need to be forwarded by the TURN Server.

For the STUN manner, the process of restoring or establishing a media channel in the foregoing step 102 may further specifically include the following implementation manner:

When a change occurs to a private IP address and a port that are of a STUN client on the first terminal, the STUN client sends a second request message to a STUN server to which the STUN client belongs, where the second request message carries information about an original public IP address and an original port that are of the STUN client; and the STUN server establishes a mapping relationship between information about a new IP address and a new port that are of the STUN client and the information about the original public IP address and the original port that are of the STUN client, and establishes a new media channel according to the mapping relationship. For the TURN manner, the process of restoring or establishing a media channel in the foregoing step 102 may further specifically include the following implementation manner:

When a change occurs to a private IP address and a port that are of a TURN client on the first terminal, the TURN client sends a third request message to a TURN server to which the TURN client belongs, where the third request message carries information about an original public IP address and an original port that are of the TURN server; and the TURN server establishes a mapping relationship between information about a new IP address and a new port that are of the TURN client and the information about the original public IP address and the original port that are of the TURN server, and establishes a new media channel according to the mapping relationship.

In the foregoing two implementation manners, when a change occurs to a private IP address and a port that are of a first NAT client on a first terminal, in order to restore or establish a media channel quickly, a mapping relationship between information about a new IP address and a new port that are of the first NAT client and information about an original public IP address and an original port, and the first terminal still uses the original public IP address and port of the first NAT client to transmit a media stream.

The following describes the technical solutions of the present invention in detail by using a specific implementation manner.

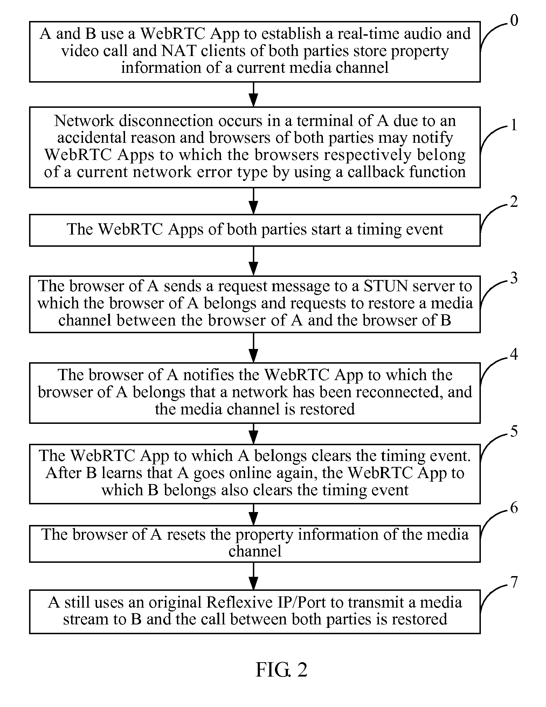

It is assumed that, in the following application scenario, user A uses a WebRTC app to call user B, and for some reasons, network disconnection suddenly occurs to A. If a STUN manner is used to implement NAT traversal during this call setup process, and an IP address and a port that are of a terminal of A do not change, as shown in FIG. 2, the following implementation steps are included:

Step 0. A and B use a WebRTC App to establish a real-time audio or video call (in a specific application, it may be implemented by using an RTCPeerConnection object), and when the call is connected, NAT clients (that is, browsers Browser) of both parties store property information of a current media channel.

If RTCPeerConnection uses the STUN manner to implement NAT traversal during this call setup process, information stored by the clients of both parties may include:
a transaction identifier (Transaction ID), which may be a 96-bit number used to uniquely identify a STUN transaction;
a reflexive IP address/port number (Reflexive IP/Port): a public IP address and a port number that are allocated by an outmost NAT to a STUN client when the STUN client sends a binding request to a STUN server, that is, an external address on an outlet NAT;
a destination IP address/port number (Destination IP/Port): an IP address and a port number that are of a peer device that communicates with the STUN client;
a local description (Local Description): recently set local description information and a local candidate address that is generated by an ICE (Interactive Connectivity Establishment, Interactive Connectivity Establishment) proxy; and
a remote description (Remote Description): recently set remote description information and a remote candidate address provided.

Step 1. Network disconnection occurs to the terminal of A due to an incidental reason and, by using the prior art, a browser of A learns that a network connection is gone, a WebRTC server (WebRTC server) learns that A is disconnected, and that a browser of B no longer receives a media stream of A. In this case, the browsers of both parties may notify the WebRTC Apps to which the browsers respectively belong of a current network error type, that is, no network connection, by using a callback function RTCPeerConnectionErrorCallback.

Step 2. The WebRTC Apps of both parties respond to the "no network connection" error type by starting a timing event.

An App developer may preset a time threshold T, and when there is still no network connection beyond this time, a browser notifies the App of call disconnection and clears previously stored property related information of a media channel. If the network connection is resumed in a time less than T, the following steps are performed:

Step 3. The browser of A sends a request message to a STUN server to which the browser of A belongs, requesting to restore the media channel to the browser of B.

This request message may carry the foregoing Transaction ID for a purpose of notifying the STUN server to which the browser of A belongs that the call needs to be held.

Step 4. The browser of A notifies the WebRTC App to which the browser of A belongs that the network reconnection is resumed, and that the media channel is restored.

Step 5. The WebRTC App to which A belongs clears the timing event. After B learns that A is online again, the WebRTC App to which B belongs also clears the timing event.

Step 6. The browser of A resets the Local Description and Remote Description in the property information of the media channel.

Step 7. A still uses an original Reflexive IP/Port to transmit a media stream to B and the call between the two parties is restored.

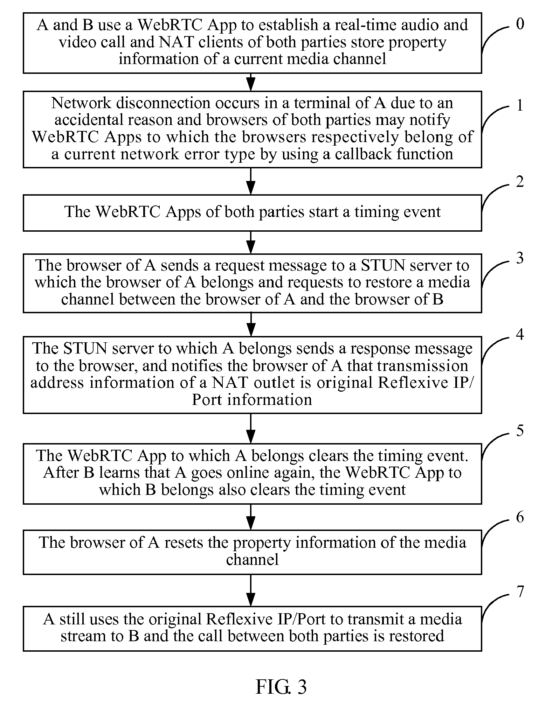

In the following embodiment of a second application scenario, a STUN manner is still used to implement NAT traversal. However, due to an impact of factors such as terminal roaming or a NAT dynamic allocation policy, a change occurs to an IP address and a port that are of a terminal of A. As shown in FIG. 3, the following implementation steps are included:

Step 0. A and B use a WebRTC App to establish a real-time audio or video call, and when the call is connected, NAT clients (that is, browsers Browser) of both parties store property information of a current media channel.

The property information of the media channel may include: a transaction identifier, a reflexive IP address/port number, a destination IP address/port number, a local description, a remote description, and the like.

Step 1. Network disconnection occurs to the terminal of A due to an incidental reason, a browser of A learns that a network connection is gone, a WebRTC server (WebRTC server) learns that A is disconnected, and that a browser of B no longer receives a media stream of A. In this case, the browsers of both parties may notify the WebRTC Apps to which the browsers respectively belong of a current network error type, that is, no network connection, by using a callback function RTCPeerConnectionErrorCallback.

Step 2. The WebRTC Apps of both parties respond to the "no network connection" error type by starting a timing event.

Step 3. The browser of A sends a request message to a STUN server to which the browser of A belongs, requesting to restore the media channel between the browser of A and the browser of B.

This request message carries information about the original Reflexive IP/Port, and the information may be carried by adding an XOR-MAPPED-ADDRESS or MAPPED-ADDRESS attribute in the request message.

The MAPPED-ADDRESS attribute indicates a reflexive transmission address of a client, where the address includes an 8-bit address family, a 16-bit port, and an IP address of a fixed length, and this attribute directly presents the transmission address; and the XOR-MAPPED-ADDRESS attribute indicates a transmission address that is processed by using an XOR function.

Step 4. The STUN server to which A belongs sends a response message to the browser, and notifies the browser of A that transmission address information of a NAT outlet is the original Reflexive IP/Port information.

In this step, the STUN server extracts the Reflexive IP/Port information from the XOR-MAPPED-ADDRESS or MAPPED-ADDRESS attribute, uses the Reflexive IP/Port information as the transmission address of the NAT outlet of the client, and returns the Reflexive IP/Port information to the client. In the response message, the XOR-MAPPED-ADDRESS or MAPPED-ADDRESS attribute is also set to the Reflexive IP/Port.

By using the foregoing manner, a NAT mapping relationship exists between a changed private IP /Port and the original Reflexive IP/Port, so that A may continue using the original Reflexive IP/Port to transmit a media stream to B.

Step 5. The WebRTC App to which A belongs clears the timing event. After B learns that A is online again, the WebRTC App to which B belongs also clears the timing event.

Step 6. The browser of A resets the Local Description and Remote Description in the property information of the media channel.

Step 7. A still uses the original Reflexive IP/Port to transmit a media stream to B and the call between the two parties is restored.

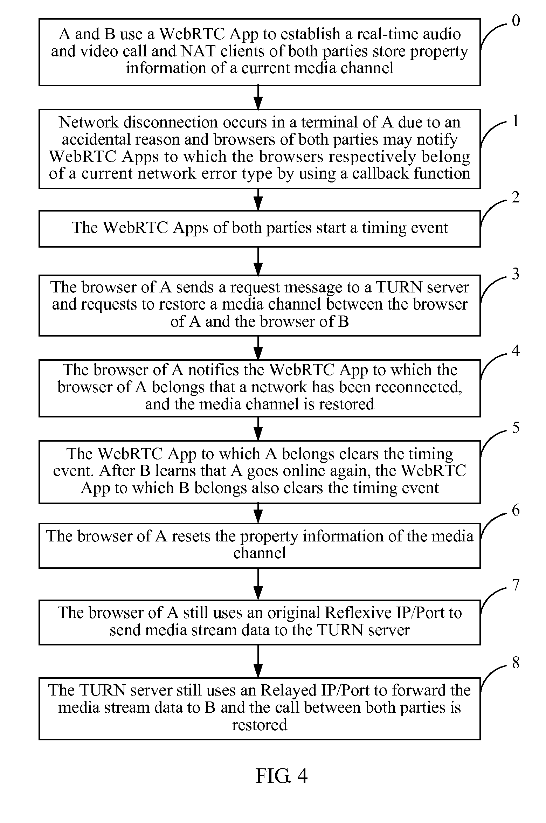

In the following embodiment of a third application scenario, a TURN manner is used to implement NAT traversal, and an IP address and a port that are of a terminal of A do not change. As shown in FIG. 4, the following implementation steps are included:

Step 0. A and B use a WebRTC App to establish a real-time audio or video call (in a specific application, it may be implemented by using an RTCPeerConnection object), and when the call is connected, NAT clients (that is, browsers Browser) of both parties store property information of a current media channel, where the stored information may include:
a relayed IP address/port number (Relayed IP/Port): a public address and a port that are of a TURN server (TURN Server) and controlled by the TURN server to be allocated to a TURN client;
a reflexive IP address/port number (Reflexive IP/Port): a public IP address and a port number that are allocated by an outlet NAT to the TURN client;
a destination IP address/port number (Destination IP/Port): an IP address and a port number that are of a peer device that communicates with the TURN client;
a local description (Local Description): recently set local description information and a local candidate address that is generated by an ICE proxy; and
a remote description (Remote Description): recently set remote description information and a remote candidate address provided.

Step 1. Network disconnection occurs to the terminal of A due to an incidental reason and, by using the prior art, a browser of A learns that a network connection has been lost, a WebRTC server (WebRTC server) learns that A has already lost the connection, and that a browser of B no longer receives a media stream of A. In this case, the browsers of both parties may notify the WebRTC Apps to which the browsers respectively belong of a current network error type, that is, no network connection, by using a callback function RTCPeerConnectionErrorCallback.

Step 2. The WebRTC Apps of both parties respond to the "no network connection" error type by starting a timing event.

Step 3. The browser of A sends a request message to a TURN server, requesting to restore the media channel between the browser of A and the browser of B.

Step 4. The browser of A notifies the WebRTC App to which the browser of A belongs that the network connection is resumed, and the media channel is restored.

Step 5. The WebRTC App to which A belongs clears the timing event. After B learns that A is online again, the WebRTC App to which B belongs also clears the timing event.

Step 6. The browser of A resets the Local Description and Remote Description in the property information of the media channel.

Step 7. The browser of A still uses the original Reflexive IP/Port to send media stream data to the TURN server.

Step 8. The TURN server still uses an original Relayed IP/Port to forward the media stream data to B and the call between both parties is restored.

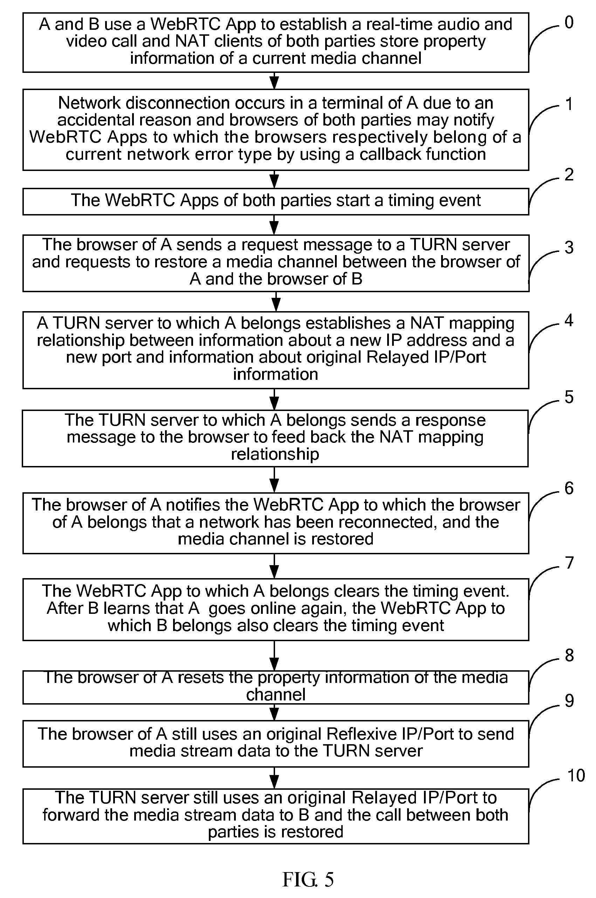

In the following embodiment of a fourth application scenario, a TURN manner is still used to implement NAT traversal. However, due to an impact of factors such as terminal roaming or a NAT dynamic allocation policy, a change occurs to an IP address and a port that are of a terminal of A. As shown in FIG. 5, the following implementation steps are included:

Step 0. A and B use a WebRTC App to establish a real-time audio or video call (in a specific application, it may be implemented by using an RTCPeerConnection object), and when the call is connected, NAT clients (that is, browsers Browser) of both parties store property information of a current media channel, where the stored information may include: a relayed IP address/port number, a reflexive IP address/port number, a destination IP address/port number, a local description, and a remote description.

Step 1. Network disconnection occurs to the terminal of A due to an incidental reason and, by using the prior art, a browser of A learns that a network connection has been lost, a WebRTC server (WebRTC server) learns that A has already lost the connection, and that a browser of B no longer receives a media stream of A. In this case, the browsers of both parties may notify the WebRTC Apps to which the browsers respectively belong of a current network error type, that is, no network connection, by using a callback function RTCPeerConnectionErrorCallback.

Step 2. The WebRTC Apps of both parties respond to the "no network connection" error type by starting a timing event.

Step 3. The browser of A sends a request message to a TURN server and requests to restore the media channel between the browser of A and the browser of B.

In this step, the request message carries the original Relayed IP/Port information, so that a home TURN server establishes a NAT mapping relationship between information about a new IP address and a new port and the original Relayed IP/Port information.

Step 4. The TURN server to which A belongs establishes a NAT mapping relationship between information about a new IP address and a new port and the original Relayed IP/Port information.

Step 5. The TURN server to which A belongs sends a response message to the browser to feed back the NAT mapping relationship.

Step 6. The browser of A notifies the WebRTC App to which the browser of A belongs that the network connection is resumed, and the media channel is restored.

Step 7. The WebRTC App to which A belongs clears the timing event. After B learns that A is online again, the WebRTC App to which B belongs also clears the timing event.

Step 8. The browser of A resets the Local Description and Remote Description in the property information of the media channel.

Step 9. The browser of A still uses the original Reflexive IP/Port to send media stream data to the TURN server.

Step 10. The TURN server still uses the original Relayed IP/Port to forward the media stream data to B and the call between the two parties is restored.

In addition, it should be noted that, in a fifth application scenario, when the first terminal and a UPnP (Universal Plug and Play, Universal Plug and Play) gateway device to which the first terminal belongs both support the UPnP protocol, a NAT client on the terminal sends a UPnP port mapping request to the UPnP gateway device, receives information about a port that is allocated, according to the port mapping request, by the UPnP gateway device, and reestablishes an original media channel according to an original IP address and the allocated port.

In this implementation manner, when a network connection is resumed after short network disconnection, information about IP addresses and ports used by both parties of a call does not change, and therefore, an original media channel can be reestablished according to an original IP address and an allocated port.

Corresponding to method embodiments of the present invention, the present invention further provides a terminal.

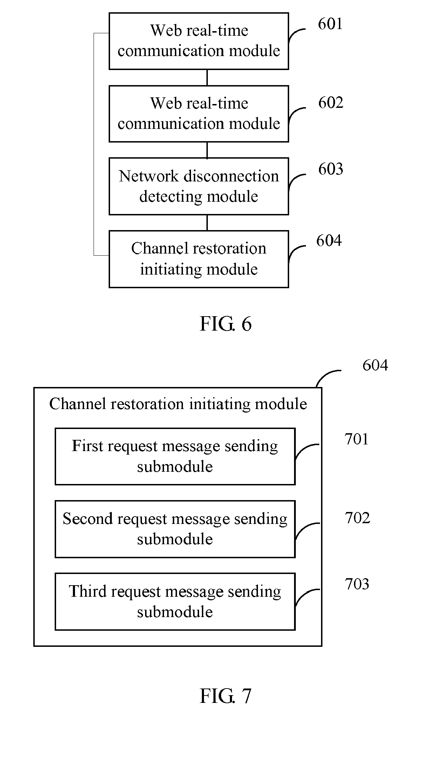

Refer to FIG. 6, which is a block diagram of a first embodiment of a terminal according to the present invention, and the terminal may include:
a web real-time communication module 601, configured to perform web real-time communication with a second terminal;
an information saving module 602, configured to save property information of a current media channel;
a network disconnection detecting module 603, configured to detect whether network disconnection occurs, and when a network connection is restored within a preset time threshold after network disconnection occurs, trigger a channel restoration initiating module 604; and
the channel restoration initiating module 604, configured to automatically initiate, according to the property information and within a preset time threshold, a process of restoring or establishing a media channel; where
the web real-time communication module 601 is further configured to continue web real-time communication with the second terminal through the restored or established media channel.

It can be learned from the foregoing embodiment that, during a process of web real-time communication between a terminal and a peer terminal, when a network connection is restored after short network disconnection, the disconnected terminal can automatically initiate a process of restoring or establishing a media channel to restore or establish a media channel and continue web real-time communication with the peer second terminal through the restored media channel. In this way, the web real-time communication between the terminals of both parties is reconnected automatically, which avoids impacting use experience of a user brought by communication interruption.

In specific implementation, as shown in FIG. 7, the channel restoration initiating module 604 may include:
a first request message sending submodule 701, configured, when a private IP address and a port that are of a NAT client on the terminal do not change, for the NAT client to send a first request message to a NAT server to which the NAT client belongs, where the first request message is used to request the first NAT server to reestablish an original media channel according to property information of the original media channel.

The foregoing first request message sending submodule is applicable to NAT traversal implemented in a STUN manner and a TURN manner.

The channel restoration initiating module 604 may further include:
a second request message sending submodule 702, configured, when a NAT manner is a Simple Traversal of User Datagram Protocol through NAT STUN manner and a change occurs to a private IP address and a port that are of a STUN client on the terminal, for the STUN client to send a second request message to a STUN server to which the STUN client belongs, where the second request message carries information about an original public IP address and an original port that are of the STUN client, so that the STUN server establishes a mapping relationship between information about a new IP address and a new port that are of the STUN client and the information about the original public IP address and the original port that are of the STUN client, and establishes a new media channel according to the mapping relationship.

The channel restoration initiating module 604 may further include:
a third request message sending submodule 703, configured, when a NAT manner is a traversal using relay NAT TURN manner and a change occurs to a private IP address and a port that are of a TURN client on the terminal, for the TURN client to send a third request message to a TURN server to which the TURN client belongs, where the third request message carries information about an original public IP address and an original port that are of the TURN server, so that the TURN server establishes a mapping relationship between information about a new IP address and a new port that are of the TURN client and the information about the original public IP address and the original port that are of the TURN server, and establishes a new media channel according to the mapping relationship.

By using the foregoing second and third request message sending submodules, when a change occurs to a private IP address and a port that are of a first NAT client on a first terminal, in order to quickly restore or establish a media channel, a mapping relationship is established between information about a new IP address and a new port that are of the first NAT client and information about an original public IP address and an original port, and the first terminal still uses the public IP address and the port that are originally used by the first NAT client to transmit a media stream.

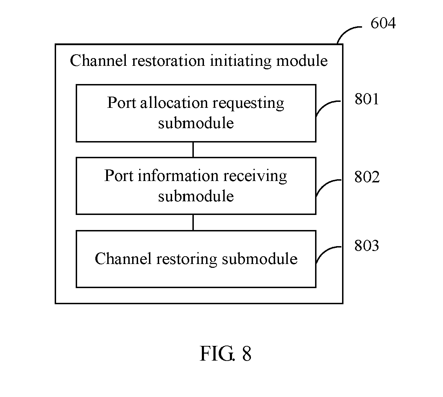

The present invention further provides an implementation manner of another channel restoration initiating module, and as shown in FIG. 8, the channel restoration initiating module may include:
a port allocation requesting submodule 801, configured, when the terminal and a UPnP gateway device to which the terminal belongs both support the UPnP protocol, for a NAT client on the terminal to send a UPnP port mapping request to the UPnP gateway device;
a port information receiving submodule 802, configured to receive information about a port that is allocated, according to the port mapping request, by the UPnP gateway device; and
a channel restoring submodule 803, configured for the NAT client to reestablish an original media channel according to an original IP address and the allocated port.

In this embodiment, when a network connection is resumed after short network disconnection, information about an IP address and a port that are used by terminals on both sides of a call does not change, and therefore, an original media channel can be reestablished according to an original IP address and an allocated port.

Corresponding to the foregoing embodiment, the present invention further provides a system for web real-time communication, and the system includes: a first terminal and a second terminal that perform web real-time communication, where the first terminal and the second terminal separately save property information of a current media channel; and when a network connection is restored within a preset time threshold after network disconnection occurs to the first terminal, the first terminal is configured to automatically initiate, according to the property information and within the preset time threshold, a process of restoring or establishing a media channel, and continue web real-time communication with the second terminal through the restored or established media channel.

The first terminal specifically includes a first NAT client, where the first NAT client corresponds to a first NAT server.

The first NAT client is configured to send, when a private IP address and a port do not change, a first request message to the first NAT server, where the first request message is used to request the first NAT server to reestablish an original media channel.

The first NAT server is configured to receive the first request message and reestablish the original media channel according to property information of the original media channel.

When the first NAT client is a STUN client, and the first NAT server is a STUN server,
the STUN client is configured to send, when a change occurs to a private IP address and a port, a second request message to the STUN server, where the second request message carries information about an original public IP address and an original port that are of the STUN client;
the STUN server is configured to establish a mapping relationship between information about a new IP address and a new port that are of the STUN client and the information about the original public IP address and the original port that are of the STUN client, and establish a new media channel according to the mapping relationship.

When the first NAT client is a TURN client, and the first NAT server is a TURN server,
the TURN client is configured to send, when a change occurs to a private IP address and a port, a third request message to the TURN server, where the third request message carries information about an original public IP address and an original port that are of the TURN server; and
the TURN server is configured to establish a mapping relationship between information about a new IP address and a new port that are of the TURN client and the information about the original public IP address and the original port that are of the TURN server, and establish a new media channel according to the mapping relationship.

In addition, when the first terminal and a UPnP gateway device to which the first terminal belongs both support the UPnP protocol, a NAT client on the terminal is configured to send a UPnP port mapping request to the UPnP gateway device, receive information about a port that is allocated, according to the port mapping request, by the UPnP gateway device, and reestablish the original media channel according to an original IP address and the allocated port.

A person of ordinary skill in the art may be aware that, the units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium and includes several instructions for instructing a computer device (which may be a personal computer, a server, or a network device) or a processor to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for web real-time communication, comprising:
performing, by a first terminal, web real-time communication with a second terminal, wherein the first terminal and the second terminal separately save property information of a current media channel;
when a network connection is restored within a preset time threshold after network disconnection occurs to the first terminal, automatically initiating, according to the property information, a process of restoring or establishing a media channel; and
continuing, by the first terminal, web real-time communication with the second terminal through the restored or established media channel.

2. The method according to claim 1, wherein the process of restoring or establishing a media channel comprises:
when a private IP address and a port that are of a first Network Address Translation NAT client on the first terminal do not change, sending, by the first NAT client, a first request message to a first NAT server to which the first NAT client belongs, wherein the first request message is used to request the first NAT server to reestablish an original media channel; and
receiving, by the first NAT server, the first request message and reestablishing, according to property information of the original media channel, the original media channel.

3. The method according to claim 2, wherein the process of restoring or establishing a media channel further comprises:
when a NAT manner is a Simple Traversal of User Datagram Protocol through NAT STUN manner and a change occurs to a private IP address and a port that are of a STUN client on the first terminal, sending, by the STUN client, a second request message to a STUN server to which the STUN client belongs, wherein the second request message carries information about an original public IP address and an original port that are of the STUN client; and
establishing, by the STUN server, a mapping relationship between information about a new IP address and a new port that are of the STUN client and the information about the original public IP address and the original port that are of the STUN client, and establishing a new media channel according to the mapping relationship.

4. The method according to claim 3, wherein the process of restoring or establishing a media channel further comprises:
when a NAT manner is a traversal using relay NAT TURN manner and a change occurs to a private IP address and a port that are of a TURN client on the first terminal, sending, by the TURN client, a third request message to a TURN server to which the TURN client belongs, wherein the third request message carries information about an original public IP address and an original port that are of the TURN server; and
establishing, by the TURN server, a mapping relationship between information about a new IP address and a new port that are of the TURN client and the information about the original public IP address and the original port that are of the TURN server, and establishing a new media channel according to the mapping relationship.

5. The method according to claim 1, wherein the process of restoring or establishing a media channel comprises:
when the first terminal and a Universal Plug and Play UPnP gateway device to which the first terminal belongs both support the UPnP protocol, sending, by a NAT client on the terminal, a UPnP port mapping request to the UPnP gateway device, receiving information about a port that is allocated, according to the port mapping request, by the UPnP gateway device, and reestablishing an original media channel according to an original IP address and the allocated port.

6. A terminal, comprising:
a web real-time communication module, configured to perform web real-time communication with a second terminal;
an information saving module, configured to save property information of a current media channel;
a network disconnection detecting module, configured to detect whether network disconnection occurs, and when a network connection is restored within a preset time threshold after network disconnection occurs, trigger a channel restoration initiating module; and
the channel restoration initiating module, configured to automatically initiate, according to the property information, a process of restoring or establishing a media channel; wherein
the web real-time communication module is further configured to continue web real-time communication with the second terminal through the restored or established media channel.

7. The terminal according to claim 6, wherein the channel restoration initiating module comprises:
a first request message sending submodule, configured, when a private IP address and a port that are of a NAT client on the terminal do not change, for the NAT client to send a first request message to a first NAT server to which the NAT client belongs, wherein the first request message is used to request the first NAT server to reestablish an original media channel according to property information of the original media channel.

8. The terminal according to claim 7, wherein the channel restoration initiating module further comprises:
a second request message sending submodule, configured, when a NAT manner is a Simple Traversal of User Datagram Protocol through NAT STUN manner and a change occurs to a private IP address and a port that are of a STUN client on the terminal, for the STUN client to send a second request message to a STUN server to which the STUN client belongs, wherein the second request message carries information about an original public IP address and an original port that are of the STUN client, so that the STUN server establishes a mapping relationship between information about a new IP address and a new port that are of the STUN client and the information about the original public IP address and the original port that are of the STUN client, and establishes a new media channel according to the mapping relationship.

9. The terminal according to claim 7, wherein the channel restoration initiating module further comprises:
a third request message sending submodule, configured, when a NAT manner is a traversal using relay NAT TURN manner and a change occurs to a private IP address and a port that are of a TURN client on the terminal, for the TURN client to send a third request message to a TURN server to which the TURN client belongs, wherein the third request message carries information about an original public IP address and an original port that are of the TURN server, so that the TURN server establishes a mapping relationship between information about a new IP address and a new port that are of the TURN client and the information about the original public IP address and the original port that are of the TURN server, and establishes a new media channel according to the mapping relationship.

10. The terminal according to claim 6, wherein the channel restoration initiating module comprises:
a port allocation requesting submodule, configured, when the terminal and a UPnP gateway device to which the terminal belongs both support the UPnP protocol, for a NAT client on the terminal to send a UPnP port mapping request to the UPnP gateway device;
a port information receiving submodule, configured to receive information about a port that is allocated, according to the port mapping request, by the UPnP gateway device; and
a channel restoring submodule, configured for the NAT client to reestablish an original media channel according to an original IP address and the allocated port.

11. A system for web real-time communication, comprising: a first terminal and a second terminal that perform web real-time communication, wherein the first terminal and the second terminal separately save property information of a current media channel, and when a network connection is restored within a preset time threshold after network disconnection occurs to the first terminal,
the first terminal is configured to automatically initiate, according to the property information, a process of restoring or establishing a media channel, and continue web real-time communication with the second terminal through the restored or established media channel.

12. The system according to claim 11, wherein the first terminal specifically comprises a first NAT client, wherein the first NAT client corresponds to a first NAT server;
the first NAT client is configured to send, when a private IP address and a port do not change, a first request message to the first NAT server, wherein the first request message is used to request the first NAT server to reestablish an original media channel; and
the first NAT server is configured to receive the first request message and reestablish the original media channel according to property information of the original media channel.

13. The system according to claim 12, wherein when the first NAT client is a STUN client, and the first NAT server is a STUN server,
the STUN client is configured to send, when a change occurs to a private IP address and a port, a second request message to the STUN server, wherein the second request message carries information about an original public IP address and an original port that are of the STUN client; and
the STUN server is configured to establish a mapping relationship between information about a new IP address and a new port that are of the STUN client and the information about the original public IP address and the original port that are of the STUN client, and establish a new media channel according to the mapping relationship.

14. The system according to claim 12, wherein when the first NAT client is a TURN client, and the first NAT server is a TURN server,
the TURN client is configured to send, when a change occurs to a private IP address and a port, a third request message to the TURN server, wherein the third request message carries information about an original public IP address and an original port that are of the TURN server; and
the TURN server is configured to establish a mapping relationship between information about a new IP address and a new port that are of the TURN client and the information about the original public IP address and the original port that are of the TURN server, and establish a new media channel according to the mapping relationship.

15. The system according to claim 11, wherein when the first terminal and a UPnP gateway device to which the first terminal belongs both support the UPnP protocol,
a NAT client on the terminal is configured to send a UPnP port mapping request to the UPnP gateway device, receive information about a port that is allocated, according to the port mapping request, by the UPnP gateway device, and reestablish an original media channel according to an original IP address and the allocated port.
